(19) Europäisches Patentamt
European Patent Office
Office européen des brevets

(11) EP 0 561 223 B1

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int. Cl.$^6$: **C07F 9/12**, D06M 13/292

(21) Anmeldenummer: **93103410.2**

(22) Anmeldetag: **03.03.1993**

# (54) Umsetzungsprodukte von Phosphiten, Chinonen und Isocyanaten enthaltende Zusammensetzungen

Composition containing reaction products of phosphites, chinones and isocyanates

Composition contenant des produits de réaction de phosphites, quinones et isocyanates

(84) Benannte Vertragsstaaten:
**AT BE CH DE DK ES FR GB IT LI NL PT SE**

(30) Priorität: **14.03.1992 DE 4208235**

(43) Veröffentlichungstag der Anmeldung:
**22.09.1993 Patentblatt 1993/38**

(73) Patentinhaber: **Pfersee Chemie GmbH**
**D-86460 Langweid a. Lech (DE)**

(72) Erfinder:
- **Dermeik, Salman, Dr.**
  **W-8900 Augsburg (DE)**
- **Wanner, Martina**
  **W-8901 Neusäss (DE)**
- **Lemmer, Karl-Heinz**
  **W-8900 Augsburg (DE)**
- **Braun, Reinhold**
  **W-8930 Schwabmünchen (DE)**

(56) Entgegenhaltungen:
**DE-C- 937 956** **US-A- 2 691 566**
**US-A- 3 725 510**

- **CHEMICAL ABSTRACTS, vol. 57, no. 9, 29. Oktober 1962, Columbus, Ohio, US; abstract no. 11120h, Spalte 11120H ;**
- **EGYPTIAN JOURNAL OF CHEMISTRY Bd. 25, Nr. 4, CAIRO EG, Seiten 397-401 M. M. SIDKY ' Synthesis of Dialkyl (2-O- Carbamoyl-3,4,5,6-Tetrachlorophenyl)**
- **CHEMICAL ABSTRACTS, vol. 57, no. 9, 29. Oktober 1962, Columbus, Ohio, US;**
- **abstract no. 11120h, Spalte 11120H ;**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Rank Xerox (UK) Business Services
2.13.4/3.4

## Beschreibung

Die Erfindung betrifft Zusammensetzungen, welche sich durch Umsetzung von Phosphiten mit Chinonen und nachfolgende Umsetzung der dabei erhaltenen Produkte mit Isocyanaten erhalten lassen. Sie betrifft ferner die Verwendung solcher Zusammensetzungen zur Behandlung von Fasermaterialien.

Es ist bekannt, phosphorhaltige Produkte auf dem Flammschutzsektor einzusetzen. So beschreibt z.B. die DE-A 31 09 352 polymere Intumeszenzmassen. Die US-A 2 577 281 beschreibt Flammschutzmittel auf Phosphonsäurebasis.

Es ist ferner bekannt, Fasermaterialien mit Phosphorverbindungen enthaltenden Zusammensetzungen zu behandeln, um ihnen flammhemmende Eigenschaften zu verleihen. Vor allem Fasermaterialien in Form von gewebten, gewirkten oder nichtgewebten (non-wovens) Flächengebilden kommen hierfür in Betracht. So ist es z.B. möglich, durch entsprechende Behandlung zu erreichen, daß Textilien aus Cellulose, Synthesefasern oder Fasermischungen schlechter brennen als nichtbehandelte Textilien aus der gleichen Faserart. Die Behandlung von Fasermaterialien mittels Zusammensetzungen, welche Phosphorverbindungen enthalten, ist beispielsweise in der US-A 2 926 145 und in der US-A 2 733 229 beschrieben.

Die US-A 2 691 566 und die US-A 2 691 567 beschreiben ebenfalls Phosphorverbindungen enthaltende Zusammensetzungen und deren Verwendung für die Behandlung von Textilmaterialien. Den Textilien sollen hierdurch flammhemmende Eigenschaften verliehen werden. Gemäß US-A 2 691 566 können entsprechende Phosphorverbindungen durch die Umsetzung von sauren Phosphorsäurediestern mit Dimeren von Diisocyanaten oder ausgehend von substituierten Phosphorylchloriden nach mehrstufigen Umsetzungen erhalten werden. Bei letzterer Synthese werden die entsprechenden Chloride mit Hydroxylgruppen enthaltenden Verbindungen umgesetzt. Anschließend erfolgt Reaktion mit den Dimeren eines Diisocyanats. Der Nachteil der so erhaltenen Produkte liegt darin, daß stark gefärbte Verunreinigungen entstehen und in den Reaktionsgemischen enthalten sein können, welche sich, wenn überhaupt, nur sehr schwer entfernen lassen. Ohne deren Entfernung jedoch lassen sich die Reaktionsprodukte nur in sehr eingeschränktem Maß für die Behandlung von Fasermaterialien verwenden. Die Verwendung für ungefärbte Textilien ist wegen der dunklen Farbe der Verunreinigungen nicht möglich. Ein weiterer Nachteil des in der US-A 26 91 566 beschriebenen Herstellungsverfahrens besteht darin, daß sich hierbei in nicht oder nur schwer kontrollierbarer Weise unerwünschte Polymere bilden, welche noch in den Endprodukten enthalten sind.

Die Umsetzung von Dialkylphosphiten mit Chinonen und die Umsetzung des erhaltenen Esters mit einem Monoisocyanat sind auch bekannt. Diese sind in Chemical-Abstracts 54, 20940a, Doklady Akad. Nauk SSSR 132, 145-148 (1960) sowie in Egyptian Journal of Chemistry, Bd. 25, Nr. 4, 397-401 beschrieben. Der Einsatz der erhaltenen Reaktionsprodukte im Flammschutz wird nicht beschrieben.

Mit den bisher bekannten, Phosphorverbindungen enthaltenden Zusammensetzungen treten Probleme auf bezüglich Effektivität der Flammfestausrüstung oder bezüglich des Griffausfalls der damit behandelten Textilien oder bezüglich der Permanenz der flammhemmenden Wirkung nach Waschprozessen oder bezüglich Eigenfarbe dieser Zusammensetzungen. Die ungenügende Permanenz von flammhemmenden Ausrüstungen ist insbesondere ein Problem bei Fasermaterialien, welche aus Polyesterfasern bestehen oder welche Polyesterfasern in Mischung mit anderen Fasern enthalten. Die noch nicht optimale Wirkung bisher bekannter (bromfreier) Phosphorsäureester auf Polyestermaterialien ist in A. Püntener et al. Melliand Textilberichte 5/1978, S. 412 bis 415 erwähnt.

Der vorliegenden Erfindung lag daher die Aufgabe zugrunde, Zusammensetzungen zur Verfügung zu stellen, welche auf Fasermaterialien eine gute flammhemmende Wirkung hervorrufen, zu einem angenehmen Griffausfall der ausgerüsteten Ware führen, welche eine befriedigende Permanenz der flammhemmenden Wirkung nach Waschprozessen ergeben und welche, wenn gewünscht, auf einfache Weise frei oder nahezu frei von gefärbten Verunreinigungen oder unerwünschten Polymeren hergestellt werden können.

Die Aufgabe wurde gelöst durch eine Zusammensetzung, erhältlich durch folgende Verfahrensschritte

a) Umsetzung eines Phosphits oder eines Gemischs von Phosphiten der allgemeinen Formel (I)

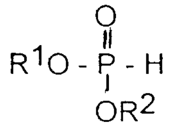

(I)

mit einem Benzochinon, Naphthochinon oder Anthrachinon oder einem Gemisch solcher Chinone bei einem pH-Wert von 6,5 oder höher, vorzugsweise von 7 bis 11 und gegebenenfalls in Anwesenheit eines Lösungsmittels, wobei das eingesetzte Chinon unsubstituiert sein kann oder an einem oder an mehreren aromatischen Ringen einen oder mehrere Substituenten aufweisen kann,

b) Umsetzung des bei Verfahrensschritt a) erhaltenen Produkts mit einem Di- oder Polyisocyanat in dem mindestens zwei -N=C=O-Gruppen an zweiwertige oder mehrwertige organische Reste gebunden sind oder einem Gemisch solcher Isocyanate, gegebenenfalls in Gegenwart einer Verbindung $R^1$ OH und gegebenenfalls in Gegenwart eines Katalystors,

c) gegebenenfalls Entfernen des Lösungsmittels nach Verfahrensschritt a) und/oder nach Verfahrensschritt b),

d) gegebenenfalls weitere Umsetzung mit einem mehrwertigen Alkohol, insbesondere Trimethylolpropan
wobei $R^1$ und $R^2$ unabhängig voneinander für einen Alkylrest mit 1 bis 8 C-Atomen oder für einen Phenylrest stehen, wobei dieser Alkylrest oder Phenylrest durch ein oder mehrere Halogenatome substituiert sein kann.

Eine vorteilhafte und daher bevorzugte Ausführungsform der Erfindung besteht in einer Zusammensetzung der genannten Art, welche dadurch gekennzeichnet ist, daß in Schritt a) unsubstituiertes p-Benzochinon oder 1.2- oder 1.4-Naphthochinon verwendet wurde.

Eine weitere bevorzugte Ausführungsform besteht in einer Zusammensetzung der genannten Art, welche dadurch gekennzeichnet ist, daß $R^1$ und $R^2$ unabhängig voneinander für einen unsubstituierten Alkylrest mit 1 bis 4 C-Atomen oder für einen unsubstituierten Phenylrest stehen, eine weitere bevorzugte Ausführungsform besteht in einer Zusammensetzung der genannten Art, die dadurch gekennzeichnet ist, daß sowohl $R^1$ als auch $R^2$ für einen Methylrest stehen. Für Verfahrensschritt a) stellt demnach die Verwendung von Dialkylphosphiten, insbesondere von Dimethylphosphit, eine bevorzugte Ausführungsform dar.

Eine Zusammensetzung der genannten Art, die dadurch gekennzeichnet ist, daß in Verfahrensschritt b) ein Diisocyanat oder ein Gemisch von Diisocyanaten der Formel

$$O = C = N - X - N = C = O$$

verwendet wurde, worin X für

$$-(CH_2)_n-$$

oder für

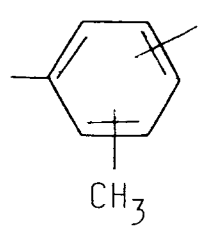

oder für

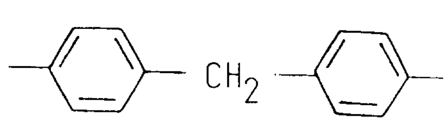

oder für

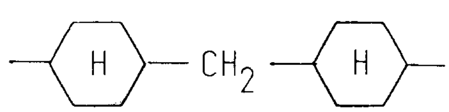

steht,
worin n für eine Zahl von 3 bis 8 steht, stellt eine weitere bevorzugte Ausführungsform erfindungsgemäßer Zusammensetzungen dar.

Weiterhin sind Zusammensetzungen bevorzugt, die sich dadurch erhalten lassen, daß im Verfahrensschritt b) Isophorondiisocyanat verwendet wurde.
Unter "Isophorondiisocyanat" ist hierbei folgende Verbindung zu verstehen:

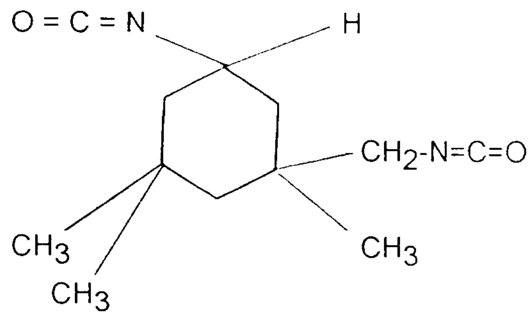

Dieses Produkt kann von der Firma Hüls, DE, bezogen werden.

Es wurde gefunden, daß durch Verwendung eines molaren Überschusses von Isophorondiisocyanat gegenüber dem aus Schritt a) erhaltenen Phosphorsäureester eine Verbesserung des Weißgrads von mit erfindungsgemäßen Zusammensetzungen behandelten Fasermaterialien, wie z.B. Textilien, erzielt werden kann, insbesondere dann, wenn pro OH -Gruppe des bei Schritt a) erhaltenen Phosphorsäureesters 2,2 bis 3,0 NCO-Gruppen des Isophorondiisocyanats eingesetzt wurden.

An Stelle des Isophorondiisocyanats in monomerer Form können auch Di-, Tri- oder Polymere dieser Verbindung eingesetzt werden, insbesondere Uretdione, die aus 2 Mol Isophorondiisocyanat durch Addition einer N = C = O-Gruppe an die NCO-Gruppe eines zweiten Moleküls entstehen.

Wenn gewünscht, kann Verfahrensschritt b) in Gegenwart einer Verbindung $R^1OH$ durchgeführt werden, wobei $R^1$ die in Anspruch 1 genannte Bedeutung besitzt, nämlich für einen Alkylrest mit 1 bis 8 C-Atomen oder für einen Phenylrest steht, wobei dieser Alkylrest oder Phenylrest durch ein oder mehrere Halogenatome substituiert sein kann.
Bevorzugt ist eine Zusammensetzung der genannten Art, bei der die Umsetzung gemäß Verfahrensschritt a) bei einem molaren Verhältnis von Phosphit : Chinon von 1 : 0,5 bis 1 : 1 durchgeführt wurde. Dieses molare Verhältnis gilt vor allem für den Fall, daß Verfahrensschritt a) in Wasser als Lösungsmittel durchgeführt wird. Falls Verfahrensschritt a) dagegen in einem organischen Lösungsmittel oder Lösungsmittelgemisch, insbesondere einem Lösungsmittel(gemisch) der in Anspruch 4 und unten näher beschriebenen Art durchgeführt wird, empfiehlt es sich, pro Mol an Chinon (bzw. Chinongemisch) nicht 1 bis 2 Mol Phosphit (bzw. Phosphitgemisch) wie im Fall von Wasser als Lösungsmittel einzusetzen, sondern 1,1 bis 1,25 Mol an Phosphit oder Phosphitgemisch. Selbstverständlich läßt sich auch in Wasser in vorteilhafter Weise mit einem molaren Verhältnis von 1,1 : 1 bis 1,25 : 1 arbeiten.

Eine weitere bevorzugte Ausführungsform besteht in einer Zusammensetzung der genannten Art, bei der die Umsetzung gemäß Verfahrensschritt b) so durchgeführt wurde, daß pro Äquivalent in Schritt a) eingesetztem Phosphit 0,5 bis 2,5 Äquivalente an Isocyanatgruppen eingesetzt wurden. Besonders günstig ist es, wenn man in Verfahrensschritt b) die Menge an Isocyanatäquivalenten auf die Äquivalente an OH-Gruppen bezieht, die im Hauptprodukt vorliegen, das bei Verfahrensschritt a) gebildet wird. Dies sei am Beispiel der Umsetzung von Dimethylphosphit und p-Benzochinon erläutert, bei der als Hauptprodukt der Dimethyl-, p-Hydroxyphenylester der Phosphorsäure (nachstehend Phosphorsäure-Hydrochinonester oder Hydrochinonester genannt) entsteht. Für die Umsetzung von Hydrochinonester mit Isocyanat gemäß Verfahrensschritt b) verwendet man vorzugsweise die Ausgangsverbindungen in solchen Mengen, daß pro Hydroxylgruppe des Phosphorsäure-Hydrochinonesters 1,0 bis 3,0, insbesondere 1,3 bis 2,0 Isocyanatgruppen vorliegen. Die Ermittlung der hierfür benötigten Menge an mehrwertigem Isocyanat kann über eine quantitative NCO-Bestimmung erfolgen. Falls der Hydrochinonester nicht in reiner Form eingesetzt wird, sondern in Form des nach Verfahrensschritt a) erhaltenen Produktgemischs, so muß die Menge an Hydrochinonester in diesem Gemisch (Ausbeute von Schritt a)) bestimmt werden, um für Schritt b) die bevorzugt zu verwendende Menge an diesem Gemisch zu ermitteln. Die quantitative Bestimmung des Hydrochinonesters gelingt durch Gaschromatographie (GC) oder durch Hochdruckflüssigkeitschromatographie (HPLC).

Besonders bevorzugt sind erfindungsgemäße Zusammensetzungen der genannten Art, die dadurch gekennzeichnet sind, daß zu Beginn von Verfahrensschritt a) der pH-Wert des Reaktionsgemisches 7 bis 8 betrug. Verfahrensschritt a) wird so durchgeführt, daß zu Beginn und während der Reaktion gemäß Schritt a) der pH-Wert bei 6,5 oder höher, z.B. bis maximal 11, liegt, weil andernfalls Produkte mit nicht zufriedenstellenden Eigenschaften erhalten werden. Eine Zusammensetzung der genannten Art, bei der gegen Ende oder nach Verfahrensschritt a) dem Reaktionsgemisch ein Sulfit zugegeben wurde, stellt ebenfalls eine bevorzugte Ausführungsform dar, insbesondere, wenn Schritt a) in Wasser als Lösungsmittel durchgeführt wurde. In diesem Fall ist das Sulfit bevorzugt wasserlöslich. Ebenfalls bevorzugt ist, daß nach Verfahrensschritt a) das erhaltene Produkt umkristallisiert, insbesondere aus Wasser umkristallisiert, und nur das

umkristallisierte Produkt für Verfahrensschritt b) eingesetzt wurde. Diese Ausführungsform ist insbesondere dann zweckmäßig, wenn Verfahrensschritt a) in Wasser als Lösungsmittel durchgeführt wurde.

Die erfindungsgemäßen Zusammensetzungen lassen sich nach dem nachfolgend im einzelnen beschriebenen Verfahren erhalten:

Das Verfahren zur Herstellung der erfindungsgemäßen Zusammensetzungen umfaßt die Verfahrensschritte a) und b) wie sie in den Patentansprüchen aufgeführt sind.

In Schritt a) wird ein Phosphit der Formel (I)

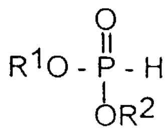

(I)

mit einem Benzochinon, Naphthochinon oder Anthrachinon umgesetzt. An Stelle eines einzigen Phosphits der Formel (I) kann auch ein Gemisch von Phosphiten verwendet werden, die alle unter Formel (I) fallen und sich beispielsweise in der Natur des Restes $R^1$ und/oder des Restes $R^2$ unterscheiden. Das für die Umsetzung gemäß Verfahrensschritt a) eingesetzte Benzochinon, Naphthochinon oder Anthrachinon kann unsubstituiert sein, es kann aber auch an einem oder an mehreren aromatischen Ringen einen oder mehrere Substituenten aufweisen. Als Substituenten kommen in diesem Fall insbesondere Chlor- oder Bromatome in Betracht. Falls ein Anthrachinon verwendet wird, handelt es sich beispielsweise um 9,10-Anthrachinon. Bevorzugt jedoch wird als Chinon ein unsubstituiertes 1.4-Benzochinon (p-Benzochinon) oder unsubstituiertes 1.2- oder unsubstituiertes 1.4-Naphthochinon eingesetzt. An Stelle eines einzigen Chinons kann auch ein Gemisch von Chinonen der genannten Art verwendet werden.

Die Phosphite der Formel (I) sind bekannte Verbindungen. Die Formel (I) trägt der Tatsache Rechnung, daß das tautomere Gleichgewicht bei Phosphiten überwiegend auf der Seite dieser Formel liegt. Die Reste $R^1$ und $R^2$ in Formel (I) stehen unabhängig voneinander für einen geradkettigen oder verzweigten Alkylrest mit 1 bis 8 Kohlenstoffatomen oder für einen Phenylrest. Die entsprechenden Alkylreste oder Phenylreste können ein oder mehrere Halogenatome als Substituenten aufweisen, in diesem Fall insbesondere Chlor- oder Bromatome. Vorzugsweise stehen $R^1$ und $R^2$ jedoch unabhängig voneinander für jeweils einen unsubstituierten Alkylrest mit 1 bis 4 Kohlenstoffatomen oder für einen unsubstituierten Phenylrest. Besonders gute Ergebnisse werden erhalten, wenn sowohl $R^1$ als auch $R^2$ für $CH_3$ stehen.

Eine Umsetzung von Dialkylphosphiten mit Chinonen, wie sie in Verfahrensschritt a) durchgeführt wird, ist aus der Literatur bekannt. Solche Reaktionen sind beispielsweise beschrieben in "J. Org. Ch." Vol. 38, Nr. 12 (1973) Seite 2151 ff, "J. Org. Ch.", Vol. 22 (1957) Seiten 1282/83, "J. Amer. Chem. Soc.", Vol. 81(1959), Seiten 4338 ff., "Chemical Abstracts" 54, 20940 a und DE-Patentschrift Nr. 937 956. In diesen Dokumenten sind geeignete Bedingungen angegeben, wie Schritt a) des zu erfindungsgemäßen Zusammensetzungen führenden Verfahrens durchgeführt werden kann, und es sind auch Produkte solcher Reaktionen aufgeführt. In Schritt a) des zu erfindungsgemäßen Zusammensetzungen führenden Verfahrens werden, wie analytische Untersuchungen zeigten, Gemische von Produkten erhalten. Die Natur und Menge der einzelnen Komponenten dieser Gemische hängen von den gewählten Verfahrensbedingungen ab, insbesondere von Art und Mengenverhältnissen der Ausgangsprodukte. Es ist anzunehmen, daß durch Addition der P - H-Verbindung (Phosphit) an das Chinonsystem als Hauptprodukt ein Phosphorsäuretriester gebildet wird. Falls p-Benzochinon eingesetzt wurde, entsteht demnach als Hauptprodukt ein Ester der Formel

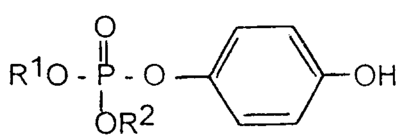

Entsprechend entstehen andere aromatische Ester mit freien OH-Gruppen bei der Umsetzung mit anderen Chinonen.

Für die Umsetzung gemäß Verfahrensschritt a) setzt man zweckmäßigerweise entweder einander äquivalente Mengen an Chinon und Phosphit ein oder man arbeitet mit einem Überschuß an Phosphit. Es ist bevorzugt, Verfahrensschritt a) mit einem molaren Verhältnis von Phosphit zu Chinon von 1 : 0,5 bis 1 : 1 durchzuführen. Dies gilt, wie oben erwähnt, vor allem, wenn Wasser als Lösungsmittel dient. Im Fall organischer Lösungsmittel ist vielfach ein molares Verhältnis Phosphit(gemisch) zu Chinon(gemisch) von 1,1 : 1 bis 1,25 : 1 zweckmäßig.

Verfahrensschritt a) kann prinzipiell in einem beliebigen Lösungsmittel durchgeführt werden; beispielsweise ist Methanol gut geeignet. Noch günstigere Lösungsmittel(gemische) werden unten beschrieben. Wasser als Lösungsmittel bei einer Temperatur im Bereich von 40 bis 80°C ist ebenfalls gut geeignet. Für den Fall von Dimethylphosphit und

p-Benzochinon als Ausgangssubstanzen hat dies den Vorteil, daß das bei der Umsetzung entstehende Hauptprodukt beim Abkühlen ausfällt und durch Umkristallisieren, insbesondere aus Wasser, bequem und effektiv gereinigt werden kann. Bei dieser Arbeitsweise ist es zweckmäßig, nur das durch Umkristallisation gereinigte, farblose oder nahezu farblose Produkt für den nachfolgenden Verfahrensschritt b) (Umsetzung mit Di- oder Polyisocyanat) einzusetzen und das nach Umkristallisation erhaltene Filtrat zu verwerfen oder anderweitig zu verwenden.

An Stelle von Wasser oder Methanol als Lösungsmittel für Verfahrensschritt a) haben sich andere Lösungsmittel oder Gemische davon als besonders geeignet erwiesen, die in Anspruch 4 genannt sind. Besonders bevorzugte Ausführungsformen erfindungsgemäßer Zusammensetzungen sind demnach dadurch gekennzeichnet, daß Verfahrensschritt a) in einer Verbindung $R^3OR^5$, einer Verbindung $R^5OR^5$, einer Verbindung $R^5COOR^5$ oder in einer Verbindung $(R^3O)_x(R^4O)_{3-x}P = O$ oder einem Gemisch solcher Verbindungen als Lösungsmittel durchgeführt wird, wobei jeder anwesende Rest $R^3$ ein, ggf. substituierter, Phenyl- oder Naphthylrest und jeder anwesende Rest $R^4$ ein unverzweigter oder verzweigter Alkylrest mit 1 bis 18, vorzugsweise mit 4 bis 12 Kohlenstoffatomen ist, jeder anwesende Rest $R^5$ ein Alkylrest mit 1 bis 6 Kohlenstoffatomen ist und wobei x für 0, 1,2 oder 3 steht. Enthält eine der genannten Verbindungen in einem Molekül mehrere Reste $R^3$ oder mehrere Reste $R^4$ oder mehrere Reste $R^5$, so können diese jeweils zur gleichen Gruppe gehörenden Reste $R^3$ bzw. $R^4$ bzw. $R^5$ jeweils einander gleich oder voneinander verschieden sein.

Besonders geeignete Lösungsmittel für die Durchführung von Verfahrensschritt a) sind Phosphorsäuretriester der allgemeinen Formel $(R^3O)_x (R^4O)_{3-x} P = O$, die unten näher beschrieben werden. Neben diesen Phosphorsäuretriestern sind als Lösungsmittel besonders gut geeignet Ether der allgemeinen Formeln $R^3OR^5$ oder $R^5OR^5$ oder Ester der Formel $R^5COOR^5$. Diese Ether $R^3OR^5$ oder $R^5OR^5$ oder Ester der Formel $R^5COOR^5$ können in bestimmten Fällen sogar noch vorteilhaftere Ergebnisse bringen als die Phosphorsäuretriester $(R^3O)_x (R^4O)_{3-x}PO$, und zwar bezüglich des Griffs von mit erfindungsgemäßen Zusammensetzungen behandelten Flächengebilden aus Fasermaterialien. Vor allem dann, wenn Phosphorsäuretriester als Lösungsmittel eingesetzt und nach der Herstellung erfindungsgemäßer Zusammensetzungen nicht vollständig entfernt werden, ist unter Umständen der Griff behandelter Textilien aus Polyesterfasern noch nicht so angenehm wie im Fall der Verwendung von Verbindungen der Formeln $R^3OR^5$, $R^5OR^5$ und $R^5COOR^5$.

In den genannten Formeln stehen alle Reste $R^3$ unabhängig voneinander jeweils für einen Phenyl- oder Naphthylrest, der Substituenten tragen kann und alle Reste $R^4$ unabhängig voneinander jeweils für einen unverzweigten oder verzweigten Alkylrest mit 1 bis 18 Kohlenstoffatomen. Bevorzugt enthalten alle anwesenden Reste $R^4$4 bis 12 Kohlenstoffatome. Der Wert von x in den als Lösungsmittel geeigneten Phosphorsäuretriestern kann 0, 1, 2 oder 3 sein

Sehr gut geeignete Vertreter der Verbindungen $(R^3O)_x (R^4O)_{3-x} P=O$, d.h. der als Lösungsmittel für Verfahrensschritt a) gut geeigneten Phosphorsäuretriester sind Triarylphosphate wie z.B. Triphenylphosphat ($R^3 = C_6H_5$, x = 3) oder Diarylalkylphosphate z.B. n-Butyl-diphenylphosphat ($R^3 = C_6H_5$, $R^4$ = n-$C_4H_9$, x = 2) oder Trialkylphosphate wie Tri-n-butylphosphat ($R^4$ = n-$C_4H_9$, x = 0). In jedem Fall ist $R^3$ ein Phenylrest oder ein Naphthylrest; der Rest $R^3$ kann jedoch Substituenten aufweisen, wie z.B. Alkylgruppen mit 1 bis 4 C-Atomen. $R^3$ kann für einen, gegebenenfalls substituierten, $\alpha$-Naphthyl- oder $\beta$-Naphthylrest stehen. Der Rest $R^4$ ist ein Alkylrest mit 1 bis 18 C-Atomen, der verzweigt oder unverzweigt sein kann. Selbstverständlich können für den Fall, daß in den als Lösungsmittel geeigneten Verbindungen $(R^3O)_x (R^4O)_{3-x} P = O$ mehrere $R^3O$-Gruppen (x = 2 oder 3) oder mehrere $R^4O$-Gruppen (x = 0 oder 1) vorliegen, die einzelnen Reste $R^3$ bzw. $R^4$ voneinander verschieden sein. Unter den Phosphorsäuretriestern sind solche bevorzugt, in denen alle Reste $R^3$ jeweils für einen unsubstituierten Phenylrest und alle Reste $R^4$ jeweils für einen verzweigten oder unverzweigten Alkylrest mit 4 bis 12 C-Atomen stehen. An Stelle eines einzigen Phosphorsäuretriesters der Formel $(R^3O)_x (R^4O)_{3-x}$ PO kann selbstverständlich auch ein Gemisch von Verbindungen eingesetzt werden, die alle unter diese Formel fallen.

Die neben den Phosphorsäuretriestern $(R^3O)_x (R^4O)_{3-x} P = O$ als Lösungsmittel geeigneten Verbindungen $R^3OR^5$, $R^5OR^5$ und $R^5COOR^5$ sind Ether oder Ester, die im Normalfall bei Raumtemperatur und Normaldruck flüssig sind. $R^3$ besitzt in diesen Formeln die gleiche Bedeutung wie oben für die Phosphorsäuretriester angegeben. Alle anwesenden Reste $R^5$ stehen jeweils für einen unverzweigten oder verzweigten Alkylrest mit 1 bis 6 Kohlenstoffatomen. Besonders gut geeignete Vertreter der genannten Ether oder Ester sind n-Butyl-acetat, Diethylether und Anisol. Gegebenenfalls kann es zweckmäßig sein, unter den genannten Lösungsmitteln solche zu verwenden, in denen die nach Verfahrensschritt a) erhaltenen Phosphorsäureester schwer löslich sind.

Es wurde gefunden, daß eine vorteilhafte Ausführungsform der erfindungsgemäßen Zusammensetzungen darin besteht, daß Verfahrensschritt a), d.h. die Umsetzung von Phosphit(en) mit Chinon(en) in bestimmten oben näher beschriebenen Phosphorsäureestern oder den genannten anderen Ethern oder Estern als Lösungsmittel durchgeführt wurde. Es hat sich herausgestellt, daß hierdurch die Ausbeute an Reaktionsprodukt, nämlich einem Phosphorsäuretriester der Formel $(R^1O-) (R^2O-) (HOC_6 H_4-O-) P = O$ bis auf 90 % und mehr gesteigert werden kann und daß es nicht nötig ist, diesen Phosphorsäuretriester vor der Umsetzung mit Isocyanat (Verfahrensschritt b) zu isolieren. Die oben gemachte Aussage, daß in Verfahrensschritt a) als Hauptprodukt ein Ester der Formel $(R^1O) (R^2O) (HOC_6H_4O) P = O$ entsteht, gilt für den Fall, daß in Schritt a) ein Phosphit mit p-Benzochinon umgesetzt wurde. Der Rest $HOC_6H_4O$ ist in diesem Fall ein von Hydrochinon durch Entfernung eines Hydroxyl-Wasserstoffatoms abgeleiteter Rest. Für den Fall, daß nicht p-Benzochinon, sondern ein anderes Chinon in Verfahrensschritt a) eingesetzt wurde, entstehen natürlich

entsprechende Phosphorsäureester anderer aromatischer Dihydroxyverbindungen, die durch Addition der P-H Einheit des Phosphits von Formel I an das ungesättigte C = O-Bindungssystem des betreffenden Chinons gebildet werden. Der Einfachheit halber wird im Folgenden jedoch stellvertretend für diese Verbindungen immer nur der aus p-Benzochinon entstehende Hydrochinonester aufgeführt. Der in Schritt a) gebildete Ester muß, wie ausgeführt, nicht isoliert werden, falls Schritt a) in einem organischen Lösungsmittel oder Lösungsmittelgemisch der genannten Art durchgeführt wurde; vielmehr läßt sich Verfahrensschritt b) direkt mit dem nach Verfahrensschritt a) erhaltenen Produktgemisch durchführen, gegebenenfalls nach einer Reinigungsoperation, die z.B. darin besteht, Aktivkohle zuzusetzen und zu filtrieren.

Die Konzentration des Phosphits oder Phosphitgemisches der Formel I und des Chinons oder Chinongemischs in dem Lösungsmittel (Phosphorsäuretriester oder anderer Ester oder Ether) ist für die Durchführung von Verfahrensschritt a) nicht besonders kritisch. Sie sollte so gewählt werden, daß eine Reaktionsführung in homogener Phase möglich ist. Für den Fall, daß Verbindungen $R^3OR^5$, $R^5OR^5$ oder $R^5COOR^5$ als Lösungsmittel dienen, hat sich herausgestellt, daß es vielfach günstig für die Erzielung hoher Ausbeuten ist, Verfahrensschritt a) unter Verwendung eines molaren Verhältnisses von Chinon zu Lösungsmittel von 1 : 5 bis 1 : 50 durchzuführen.

Es ist zwar von Vorteil, aber nicht unbedingt erforderlich, daß das Lösungsmittel(gemisch) $R^3OR^5$, $R^5OR^5$, $R^5COOR^5$ oder $(R^3O)_x\ (R^4O)_{3-x}P = O$ bei Raumtemperatur flüssig ist, denn die Umsetzung gemäß Verfahrensschritt a) kann bei Verwendung eines bei Raumtemperatur festen Lösungsmittels auch bei einer höheren Temperatur erfolgen, bei der das Lösungsmittel(gemisch) flüssig vorliegt.

Es ist von der Ökonomie des Verfahrens her gesehen günstig für den Fall, daß organische Lösungsmittel für Verfahrensschritt a) eingesetzt werden, das nach Verfahrensschritt a) gebildete Produkt(gemisch), nämlich einen oder mehrere Phosphorsäure-Hydrochinonester der Formel $(R^1O)\ (R^2O)\ (HOC_6H_4O)\ P = O$ nicht zu isolieren, sondern die nach Schritt a) erhaltene Lösung dieses Esters oder Estergemischs in $R^3OR^5$, $R^5OR^5$, $R^5COOR^5$ oder $(R^3O)_x\ (R^4O)_{3-x}\ PO$ als Lösungsmittel direkt für die Umsetzung mit Isocyanat gemäß Verfahrensschritt b) zu verwenden. Allerdings empfiehlt es sich in bestimmten Fällen, vor der Durchführung von Verfahrensschritt b) ein Adsorbens zuzusetzen, anschließend zu filtrieren und das Filtrat für Verfahrensschritt b) zu verwenden. Dies ist zweckmäßig und unter Umständen sogar erforderlich, wenn die erfindungsgemäßen Zusammensetzungen später für die Behandlung ungefärbter Textilien eingesetzt werden sollen. Je nach Ausgangssubstanzen und Reaktionsbedingungen können sich bei Verfahrensschritt a) mehr oder weniger stark gefärbte Nebenprodukte bilden. Diese können aus den Lösungen durch Zusatz bekannter Adsorbentien, gegebenenfalls bei erhöhter Temperatur, und anschließende Filtration entfernt werden. Als Adsorbens insbesondere geeignet ist pulverige oder gekörnte Aktivkohle.

Wie oben erwähnt, liegt ein günstiger Temperaturbereich für die Umsetzung gemäß Verfahrensschritt a) bei 40 bis 80°C, wenn in Wasser als Lösungsmittel gearbeitet wird. Bei Verwendung organischer Lösungsmittel der genannten Art kann die Umsetzung gegebenenfalls schon bei Raumtemperatur mit akzeptabler Geschwindigkeit ablaufen, insbesondere dann, wenn ein Katalysator der unten beschriebenen Art verwendet wird. Falls erwünscht, kann auch bei Verwendung organischer Lösungsmittel der Verfahrensschritt a) bei erhöhter Temperatur durchgeführt werden, z.B. bei 30 bis 50°C.

Verfahrensschritt a) wird in annähernd neutralem bis basischem Milieu durchgeführt. Insbesondere zu Beginn der Reaktion sollte der pH-Wert bei 7,0 bis 8,0 liegen. Während der Reaktion sollte er nicht unter 6,5 sinken, vorzugsweise wird während der Durchführung von Verfahrensschritt a) ein pH-Wert von 7,0 bis 11,0 beibehalten. Die Einstellung und Beibehaltung eines gewünschten pH-Wertes kann durch Zugabe von Basen geschehen. Geeignet in bestimmten Fällen sind Alkalimetallhydroxide oder - alkoholate wie Natriumhydroxid oder Natriummethylat. Diese anorganischen Basen sind jedoch weniger bevorzugt. Besonders günstig als Basen, die gleichzeitig als Katalysatoren für die Umsetzung von Phosphit mit Chinon wirken, sind organische Stickstoffbasen. Gut geeignet hierfür sind Amine und Alkanolamine, insbesondere tertiäre Amine der Formel $(R^6)_3N$, worin alle Reste $R^6$ unabhängig voneinander jeweils für einen Alkylrest mit 1 bis 4 Kohlenstoffatomen oder für $-CH_2CH_2OH$ stehen. Daneben sind tertiäre Amine mit an N gebundenen cycloaliphatischen Resten wie Dimethyl-cyclohexylamin gut geeignet. Gut geeignet ist auch Triethylendiamin, ein ditertiäres Diamin, in dem zwei N-Atome über drei Ethylenbrücken miteinander verbunden sind. Falls Verfahrensschritt a) in Wasser durchgeführt wird, sind tertiäre Alkanolamine, wie Triethanolamin, besonders geeiget. Beim Arbeiten in organischen Lösungsmitteln sind Tris-alkylamine, wie Triethylamin oder die anderen genannten tertiären Amine besonders günstig. Weiterhin sehr gut geeignet sind Derivate des Ethylendiamins, die einen oder zwei Substituenten an einem oder beiden Stickstoffatomen tragen. Als Substituenten kommen insbesondere Alkylreste mit 1 bis 4 C-Atomen in Frage, die ihrerseits substituiert sein können, z.B. durch OH-Gruppen. Solche Produkte sind auf dem Markt erhältlich, z.B. Quadrol L oder Pluriol P (BASF AG).

In Schritt a) des zu erfindungsgemäßen Zusammensetzungen führenden Verfahrens können, wie analytische Untersuchungen zeigten, Gemische von Produkten erhalten werden. Die Natur und Menge der einzelnen Komponenten dieser Gemische hängen von den gewählten Verfahrensbedingungen ab, insbesondere von Art und Mengenverhältnissen der Ausgangsprodukte. Es ist anzunehmen, daß eine Addition der P - H-Verbindung (Phosphit) an das Chinonsystem stattfindet. Im Fall der Addition eines Phosphits $(R^1O)\ (R^2O)\ P(O)H$ an p-Benzochinon ist analytisch nachweisbar, daß das Produkt

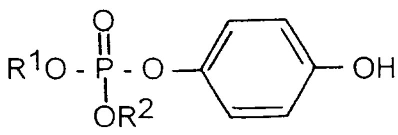

zu einem wesentlichen Anteil gebildet wird. In entsprechender Weise entstehen Ester mit freien OH-Gruppen bei der Umsetzung mit anderen Chinonen.

Falls Verfahrensschritt a) in Wasser als Lösungsmittel durchgeführt wurde, kann, wie erwähnt, vor der Durchführung von Schritt b) eine Umkristallisation angebracht sein. Falls ein organisches Lösungsmittel verwendet wurde, ist es, wie ebenfalls erwähnt, vielfach günstig, das Produkt aus Schritt a) (Hydrochinonester der Phosphorsäure) nicht zu isolieren, jedoch gegebenenfalls Verunreinigungen mittels Zusatz von Aktivkohle zu entfernen. In beiden Fällen kann zum Zwecke der Reinigung ein Sulfit zugesetzt werden. Es ist vielfach darüber hinaus günstig, nach Beendigung von Verfahrensschritt a) vor, während oder nach der Durchführung von Verfahrensschritt b) dem Reaktionsgemisch kleinere Mengen Methanol oder Ethanol zuzusetzen, z.B. 0,5 bis 10 Gew.% bezogen auf Gesamtgemisch. Hierdurch lassen sich die Gemische gegebenenfalls stabiler in flüssiger, homogener Form halten. Zusätzlich zu Methanol oder Ethanol kann zu dem gleichen Zweck Tri-n-Butylphosphat zugesetzt werden.

Es ist erforderlich, Verfahrensschritt a) im annähernd neutralen bis alkalischen Milieu durchzuführen, d.h. in einem pH-Bereich von 6,5 oder höher. Insbesondere zu Beginn der Umsetzung sollte der pH-Wert im Bereich von 7 bis 8 liegen. Er kann gegebenenfalls durch entsprechende Zusätze, z.B. von Triethanolamin oder anderen, oben genannten Aminen, eingestellt werden. Es ist ferner erforderlich, den pH-Wert während der Umsetzung gemäß Verfahrensschritt a) nicht unter 6,5 absinken zu lassen, vorzugsweise einen pH-Wert von 7 bis 11 während der Reaktion aufrecht zu erhalten, z.B. durch Zugabe von Base in bestimmten zeitlichen Abständen. Falls die Umsetzung gemäß Verfahrensschritt a) nicht in Wasser, sondern in einem organischen Lösungsmittel durchgeführt wird, bestimmt man den pH-Wert an einer 1 : 1 Mischung (auf Volumen bezogen) aus einer Probe der Reaktionslösung und Wasser.

An Stelle der für den Fall von Wasser als Lösungsmittel bereits erwähnten Umkristallisation kann das bei Verfahrensschritt a) entstehende Hauptprodukt auch noch durch eine andere Maßnahme farblos oder annähernd farblos erhalten werden, falls dies gewünscht wird. Diese Maßnahme besteht darin, gegen Ende von Verfahrensschritt a), d.h. wenn 90% oder mehr an Ausgangsprodukt bereits umgesetzt worden sind, dem Reaktionsgemisch ein Reduktionsmittel zuzusetzen. Dieser Zusatz von Reduktionsmittel kann auch nach Beendigung von Verfahrensschritt a) erfolgen. Die Menge an Reduktionsmittel wird zweckmäßigerweise je nach dem gewünschten Effekt bemessen, im Normalfall reichen 5 bis 10 % der dem ursprünglich eingesetzten Chinon äquivalenten Menge aus, um ein annähernd farbloses oder farbloses Reaktionsprodukt zu erhalten. Nach Zusatz des Reduktionsmittels kann das Reaktionsgemisch noch für eine gewisse Zeit bei erhöhter Temperatur belassen werden, um die Bildung eines farblosen Produkts zu beschleunigen. Als Reduktionsmittel sind insbesondere Sulfite, z.B. wasserlösliche Sulfite wie Natriumsulfit, sehr gut geeignet.

Der zweite Schritt des Verfahrens, mit dem erfindungsgemäße Zusammensetzungen erhalten werden können, besteht darin, das nach Durchführung von Verfahrensschritt a) erhaltene Produkt (einen Phosphorsäuretriester, bei dem mindestens eine der drei Alkoholkomponenten des Triesters eine aus der Umsetzung mit Chinon herrührende aromatische OH-Gruppe aufweist, z.B. einen Phosphorsäure-Hydrochinonester) mit einem Diisocyanat oder Polyisocyanat oder einem Gemisch solcher Isocyanate umzusetzen. Wie oben erwähnt, muß für Verfahrensschritt b) nicht unbedingt das gesamte nach Schritt a) erhaltene Produktgemisch verwendet werden. Vielmehr kann es erwünscht und zweckmäßig sein, nur das gereinigte Hauptprodukt, z.B. das durch Umkristallisation gewonnene Produkt bzw. Produktgemisch für Schritt b) zu verwenden.

Bevorzugte erfindungsgmäße Zusammensetzungen sind dadurch gekennzeichnet, daß in Verfahrensschritt b) insbesondere zwei- oder dreiwertige Isocyanate oder deren Gemische eingesetzt werden.

Die Umsetzung gemäß Verfahrensschritt b) führt ebenso wie die gemäß Schritt a) normalerweise zu einem Produktgemisch, dessen Zusammensetzung von Art und Mengenverhältnis der eingesetzten Verbindungen sowie von den Reaktionsbedingungen abhängt. Dies wird durch analytische Untersuchungen, z.B. durch HPLC (high pressure liquid chromatography) bestätigt.

Die im Schritt b) einzusetzenden Di- oder Polyisocyanate sind organische Verbindungen, in denen mindestens zwei -N=C=O-Gruppen an zweiwertige oder mehrwertige Reste gebunden sind. Vorzugsweise verwendet man ein Diisocyanat der nachfolgend angegebenen Formel oder ein Gemisch mehrerer Diisocyanate, welche unter diese Formel fallen:

$$O = C = N - X - N = C = O.$$

Der Rest X in dieser Formel kann z.B. ein unsubstituierter zweiwertiger Alkylen- oder Cycloalkylenrest sein, in diesem Fall enthält er vorzugsweise 2 bis 8 Kohlenstoffatome; gut geeignet sind beispielsweise Verbindungen, in denen X für - $(CH_2)_n$- steht, wobei n für eine Zahl von 3 bis 8 steht. Der Rest X kann gesättigt oder ungesättigt sein und einen oder mehrere Substituenten aufweisen. Besonders bevorzugt sind mehrwertige Isocyanate, bei denen X ein zweiwertiger, ggf. substituierter aromatischer Rest ist, d.h. ein Aryl- oder Aralkylrest, insbesondere ein Rest der Formel

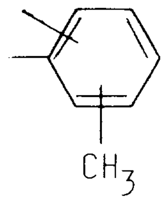

d.h. ein Toluylenrest
oder der Formel

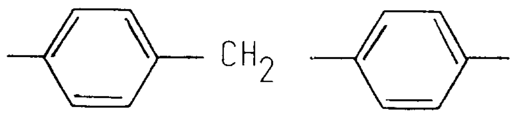

ist bevorzugt.

Auch das Diisocyanat, in dem X für

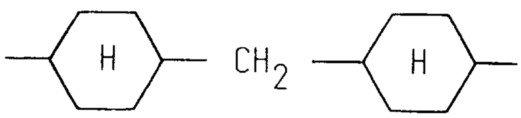

steht, ist sehr gut geeignet.
Als gut geeignet hat sich daneben Isophorondiisocyanat erwiesen.

Außerdem sind für die Durchführung von Verfahrensschritt b) weitere mehrwertige Isocyanate besonders gut geeignet, die nachfolgend näher beschrieben werden. Die Verwendung dieser Isocyanate hat sich gut bewährt für die Umsetzung mit Produkten (Hydrochinonestern), die nach Durchführung von Schritt a) in $(R^3O)_x\ (R^4O)_{3-x}\ P = O$ als Lösungsmittel erhalten werden. Diese besonders geeigneten mehrwertigen Isocyanate sind Produkte, die durch Umsetzung von 1.1.1-Trimethylolpropan $CH_3\ CH_2\ C(CH_2OH)_3$ mit einem Toluoldiisocyanat entstehen, wobei das verwendete Toluoldiisocyanat auch ein Gemisch verschiedener Isomerer sein kann. Insbesondere 2.4-Toluoldiisocyanat, 2.6-Toluoldiisocyanat oder ein Gemisch dieser Isomeren, z.B. im Verhältnis 80 Teile 2.4-Isomeres zu 20 Teile 2.6-Isomeres, kann hierfür mit Trimethylolpropan umgesetzt worden sein Vorzugsweise werden für diese Umsetzung etwa 3 Mol Toluoldiisocyanat pro Mol Trimethylolpropan eingesetzt (obwohl auch andere Mengenverhältnisse möglich sind), so daß nach folgender Reaktionsgleichung

$$CH_3CH_2\ C(CH_2OH)_3 + 3\ O = C = N - C_6H_3(CH_3) - N = C = O \rightarrow CH_3\ CH_2\ C\ (CH_2OCONH - C_6H_3(CH_3) - N = C = O)_3$$

ein Produkt mit drei freien Isocyanatgruppen gebildet wird, das mit dem beschriebenen Hydrochinonester aus Verfahrensschritt a) reagieren kann. In Wirklichkeit liegen die Verhältnisse komplizierter, da bei der Umsetzung von Trimethylolpropan mit einem Toluoldiisocyanat oder einem Gemisch isomerer Toluoldiisocyanate Neben- und Folgereaktionen ablaufen, z.B. Reaktionen der NCO-Gruppen untereinander. Daher ist es möglich, daß die Umsetzungsprodukte aus 1 Mol Trimethylolpropan und 3 Mol Toluoldiisocyanat weniger als die theoretisch zu erwartende Anzahl von 3 NCO-Gruppen pro Molekül enthalten. Geeignete Umsetzungsprodukte aus Trimethylolpropan und Toluoldiisocyanat sind handelsübliche Produkte, z.B. Desmodur L 75 der Firma Bayer AG oder Polurene AD der Firma S.A.P.I.C.I. Spa (Italien).

Noch günstiger als die Verwendung der genannten Umsetzungsprodukte aus Trimethylolpropan und Toluoldiisocyanat für die Durchführung von Verfahrensschritt b) ist eine Arbeitsweise, die nachfolgend näher beschrieben wird. Sie besteht darin, daß man zuerst das Produkt aus Verfahrensschritt a) (Hydrochinonester) mit mehrwertigem Isocyanat,

z.B. Toluoldiisocyanat in Verfahrensschritt b) in solchen Mengenverhältnissen umsetzt, daß im Umsetzungsprodukt noch freie Isocyanatgruppen vorliegen, die anschließend mit Trimethylolpropan umgesetzt werden. Günstig ist es hierbei, Verfahrensschritt b) so durchzuführen, daß 1,3 bis 3,0 Äquivalente an Isocyanatgruppen, d.h. 1,3 bis 3,0 Äquivalente N CO pro Äquivalent an OH-Gruppen des Umsetzungsprodukts von Verfahrensschritt a) vorliegen. Diese OH-Gruppen sind die an aromatische Ringe gebundenen Hydroxylgruppen, welche durch die Addition der Struktureinheit -P-H an Chinon entstehen. Besonders günstig ist es, wenn pro OH-Gruppe des Reaktionsprodukts von Schritt a) 1,3 bis 2,0 NCO-Gruppen des Di- oder Polyisocyanats, z.B. eines 2.4-0 oder 2.6-Toluoldiisocyanats der oben genannten Art oder eines Gemischs davon vorliegen. Anschließend an Verfahrensschritt b) wird dann das dabei erhaltene Additionsprodukt, das noch freie, aus dem mehrwertigen Isocyanat stammende, Isocyanatgruppen enthält, mit 1.1.1-Trimethylolpropan umgesetzt, zweckmäßigerweise in solchen Mengenverhältnissen, daß nach dieser Umsetzung keine freien NCO-Gruppen mehr vorhanden sind.

Die Umsetzung gemäß Verfahrensschritt b) kann so durchgeführt werden, daß nur das nach Verfahrensschritt a) erhaltene Produkt (-gemisch) und mehrwertiges Isocyanat miteinander umgesetzt werden, ggf. in Gegenwart eines Lösungsmittels und/oder eines Katalysators, wie unten näher beschrieben. Bei Schritt b) kann aber auch zusätzlich eine Verbindung $R^1$-OH mit eingesetzt werden, die dem Reaktionsgemisch vor oder während der Reaktion zugegeben wird. Auf diese Weise lassen sich weitere Varianten erfindungsgemäßer Zusammensetzungen erhalten. Die Menge an zusätzlich hinzugefügter Verbindung $R^1$-OH sollte zweckmäßigerweise so bemessen werden, daß höchstens 50% aller anwesenden Isocyanatgruppen mit $R^1$-OH reagieren können, d.h. die Äquivalente an $R^1$-OH sollten nicht mehr als 50% der Äquivalente an N=C=O-Gruppen betragen. In der Verbindung $R^1$-OH hat $R^1$ die gleiche Bedeutung wie oben und in Anspruch 1 für die Phosphite angegeben wurde, die als Ausgangssubstanzen dienen.

Die Umsetzung gemäß Verfahrensschritt b) kann in einem Lösungsmittel durchgeführt werden, z.B. in Essigsäureäthylester oder in einem Keton wie Methyläthylketon. Es ist jedoch auch möglich, ohne Lösungsmittel zu arbeiten; in diesem Fall geschieht die Umsetzung beispielsweise bei einer Temperatur oberhalb des Schmelzpunktes der für Schritt b) eingesetzten Ausgangssubstanzen. Die Arbeitsweise ohne Lösungsmittel hat den Vorteil, daß man das erhaltene Endprodukt, nämlich die erfindungsgemäße Zusammensetzung, anschließend direkt in demjenigen Lösungsmittel lösen oder dispergieren kann, aus dem die Behandlung von Fasermaterialien mit den Zusammensetzungen erfolgen soll, ohne daß vorher ein davon verschiedenes Lösungsmittel entfernt werden muß.

Falls mit Lösungsmittel gearbeitet werden soll, können außer Ethylacetat oder Ketonen auch n-Butylacetat oder Phosphorsäuretriester $(R^3O)_x\,(R^4O)_{3-x}\,P = O$, wie sie oben beschrieben sind, eingesetzt werden.

Falls Verfahrensschritt a) in Wasser als Lösungsmittel durchgeführt wurde, entfernt man vor Verfahrensschritt b) das Wasser, um zu verhindern, daß das Isocyanat mit Wasser reagiert.

Für die Umsetzung von Hydrochinonester mit Isocyanat gemäß Verfahrensschritt b) verwendet man vorzugsweise die Ausgangsverbindungen in solchen Mengen, daß pro Hydroxygruppe des Phosphorsäure-Hydrochinonesters 1,0 bis 3,0, insbesondere 1,3 bis 2,0 Isocyanatgruppen vorliegen. Falls eine Ermittlung der hierfür benötigten Menge an mehrwertigem Isocyanat erforderlich z.B. im Fall des aus Trimethylolpropan und Toluoldiisocyanat erhaltenen Umsetzungsprodukts, kann sie über eine quantitative NCO-Bestimmung erfolgen. Falls der Hydrochinonester nicht in reiner Form eingesetzt wird, sondern ohne vorhergehende Isolierung in Form des nach Verfahrensschritt a) erhaltenen Produktgemischs, so muß die Menge an Hydrochinonester in diesem Gemisch (Ausbeute von Schritt a)) bestimmt werden, um für Schritt b) die bevorzugt zu verwendende Menge an diesem Gemisch zu ermitteln. Die quantitative Bestimmung des Hydrochinonesters gelingt durch Gaschromatographie (GC) oder durch Hochdruckflüssigkeitschromatographie (HPLC).

Verfahrensschritt b) wird bevorzugt in Gegenwart eines Katalysators durchgeführt, geeignet hierfür sind Trialkylamine oder Dialkylzinn-(IV)-salze. Auch $Sn^{II}$-Salze, wie Zinn-octoat sind geeignet.

Es kann zweckmäßig sein, Verfahrensschritt b) unter solchen Bedingungen durchzuführen, daß Isocyanatgruppen, die am Ende der Reaktion im Gemisch noch anwesend sind, z.B. bei Verwendung eines Überschusses an Isocyanatäquivalenten, nicht in freier Form vorliegen. Vielmehr lassen sich diese Isocyanatgruppen blockieren, entweder in bekannter Form durch Zusatz von Oximen oder durch Dimerisierung oder Trimerisierung. Diese Blockierung infolge von Dimerisierung oder Trimerisierung von Isocyanatgruppen untereinander läßt sich z.B. durch Zusatz von Katalysatoren erreichen. Geeignete Maßnahmen sind in der US-A 2 691 566 sowie in J.H. Saunders et al. "Polyurethanes, Chemistry and Technology, Part I. Chemistry", Robert E. Krieger Publishing Company, Malabar, Florida, Reprint Edition 1987, Seiten 90 ff, beschrieben. Für den Fall, daß keine freien NCO-Gruppen erwünscht sind, werden also gegen Ende oder nach Durchführung von Verfahrensschritt b) Oxime oder die genannten Dimerisierungs- bzw. Trimerisierungskatalysatoren zugesetzt.

Eine andere Möglichkeit, noch vorliegende freie Isocyanatgruppen zu entfernen, besteht darin, sie mit Hydroxylgruppen enthaltenden Verbindungen wie Butanol oder Trimethylolpropan umzusetzen.

Neben der Entfernung freier Isocyanatgruppen kann es erwünscht sein, noch Reste an nicht umgesetztem Produkt aus Verfahrensschritt a) (Hydrochinonester) nach Durchführung von Verfahrensschritt b) zu entfernen. Dies kann mittels Zugabe von Monoisocyanat RNCO geschehen und kann in bestimmten Fällen zu einer Verbesserung der Eigenschaften von Flächengebilden aus Fasermaterialien führen, die mit erfindungsgemäßen Zusammensetzungen

behandelt worden sind. In der Formel RNCO steht R für einen aliphatischen, cycloaliphatischen oder für einen Phenylrest. Im Fall aliphatischer Reste besitzt R 1 bis 18 Kohlenstoffatome, cycloaliphatische Reste R besitzen im Normalfall bis zu 8 Kohlenstoffatome im Ring, insbesondere 5 oder 6 Kohlenstoffatome. Die Reste R können Substituenten tragen, z.B. Halogenatome. Sollen Monoisocyanate der Formel RNCO verwendet werden, so sind n-Propylisocyanat, n-Butylisocyanat oder Stearylisocyanat geeignet.

Die Umsetzung von Verfahrensschritt b) kann gegebenenfalls bereits bei Raumtemperatur mit akzeptabler Geschwindigkeit ablaufen, insbesondere bei Gegenwart von Katalysatoren wie Trialkylaminen oder Zinnsalzen. Falls erwünscht, kann aber auch bei erhöhter Temperatur, z.B. im Bereich von 30 bis 100°C gearbeitet werden.

Nach Durchführung von Verfahrensschritt b) können die erhaltenen erfindungsgemäßen Zusammensetzungen weiterverwendet werden, z.B. für die Behandlung von Fasermaterialien wie Textilien, um diesen flammhemmende Eigenschaften zu verleihen. Es ist anzunehmen, daß eine der Hauptkomponenten der erfindungsgemäßen Zusammensetzungen das Produkt der Umsetzung einer Verbindung mit einer freien Hydroxylgruppe mit einem Isocyanat, vorzugsweise einem mehrwertigen Isocyanat, ist, wobei diese Verbindung mit der freien Hydroxylgruppe aus der Umsetzung gemäß Verfahrensschritt a) resultiert. Die Hauptkomponente erfindungsgemäßer Zusammensetzungen würde demnach mindestens eine Phosphorsäuretriestereinheit, eine aus Chinon stammende aromatische Gruppe und eine Urethaneinheit enthalten.

Die erfindungsgemäßen Zusammensetzungen eignen sich hervorragend zur Behandlung von Fasermaterialien, insbesondere von Flächengebilden aus Fasermaterialien. Die Flächengebilde können z.B. Gewebe, Gewirke oder nichtgewebte (non-wovens) Materialien wie Vliese sein. Insbesondere Flächengebilde, welche zu einem erheblichen Anteil, z.B. zu 70 bis 100 Gew.% aus Polyesterfasern bestehen, werden für die Behandlung mit erfindungsgemäßen Zusammensetzungen bevorzugt. Die übrigen 0 bis 30 Gew.% bestehen z.B. aus Baumwolle. Als Polyesterfasern kommen hierfür vor allem Fasern aus Polyethylenterephtalat in Betracht. Selbstverständlich umfaßt der hier gebrauchte Begriff Fasern sowohl Stapel- bzw. Spinnfasern wie auch Endlosfilamente.

Für die Behandlung von Fasermaterialien, z.B. von textilen Flächengebilden, werden die erfindungsgemäßen Zusammensetzungen in Form von Lösungen oder Dispersionen eingesetzt. Als Lösungen kommen vor allem Lösungen in Methanol und als Dispersionen kommen vor allem Dispersionen in Wasser in Betracht. Diese enthalten neben erfindungsgemäßen Zusammensetzungen und ggf. weiteren für die Behandlung von Fasermaterialien üblichen Zusätzen im Normalfall noch einen oder mehrere Dispergatoren; z.B. sind oberflächenaktive nichtionische Produkte wie ethoxilierte Fettalkohole oder ethoxilierte Fettsäuren geeignet, auch Produkte mit hohem Ethoxilierungsgrad, z.B. mit durchschnittlich 10 bis 60 $CH_2CH_2O$-Einheiten pro Molekül, können hierbei verwendet werden. Als besonders vorteilhaft hat es sich erwiesen, den wäßrigen Dispersionen einen oder mehrere Phophorsäuretriester zusätzlich hinzuzufügen, deren Alkoholkomponenten aus Phenol, Resorcin oder Hydrochinon ausgewählt sind. Die erfindungsgemäßen Zusammensetzungen lassen sich jedoch auch in vorteilhafter Weise in Form einer Lösung in einem organischen Lösungsmittel für die Behandlung der Fasermaterialien einsetzen. Als Lösungsmittel kommen z.B. in Frage Alkohole, Ester oder Ketone, insbesondere Lösungsmittel, welche sich auf Grund ihres niedrigen Siedepunkts wieder gut entfernen lassen, wie z.B. Methanol. Auch Dimethylsulfoxid kann verwendet werden. Den mit erfindungsgemäßen Zusammensetzungen behandelten und in bekannter Weise nachbehandelten Fasermaterialien werden, insbesondere im Fall Polyester enthaltender Materialien, gute flammhemmende Eigenschaften mit guter Permanenz gegenüber Waschprozessen verliehen.

Für den Fall, daß der in Verfahrensschritt a) gebildete Phosphorsäureester, z.B. Hydrochinonester, nicht isoliert wird, können erfindungsgemäße Zusammensetzungen ggf. als Lösungen in $(R^3O)_x(R^4O)_{3-x}PO$, $R^3OR^5$, $R^5OR^5$ oder $R^5$ $COOR^5$ anfallen. Falls sie in Form wäßriger Dispersionen zur Behandlung von Fasermaterialien eingesetzt werden sollen, können diese Dispersionen durch Hinzufügen von Wasser und Dispergator und gegebenenfalls, wenn gewünscht, Entfernen des organischen Lösungsmittels, erhalten werden. Wenn sie in Form einer Lösung in einem organischen Lösungsmittel, z.B. Methanol, auf die Fasermaterialien aufgebracht werden sollen, wird nach Ende von Verfahrensschritt b) dieses Lösungsmittel hinzugefügt, wobei gegebenenfalls vorher ebenfalls organisches Lösungsmittel, z.B. $R^3OR^5$ entfernt wurde.

Die erfindungsgemäßen Zusammensetzungen werden in Form einer Dispersion oder Lösung in Wasser oder einem organischen Lösungsmittel, z.B. Methanol, auf ein Fasermaterial aufgebracht, um diesem flammhemmende Eigenschaften zu verleihen. Das Aufbringen kann nach bekannten Methoden geschehen, vorzugsweise durch Foulardierung. Hierbei enthalten die Flotten zweckmäßigerweise etwa 100 bis 300 g/l der erfindungsgemäßen Zusammensetzung oder eines Gemischs von erfindungsgemäßen Zusammensetzungen. Daneben können sie noch weitere, für die Behandlung von Fasermaterialien bzw. Textilien üblicherweise verwendete Produkte enthalten, z.B. Antistatika oder Weichgriffmittel. Beim Foulardieren kann beispielsweise so weit abgequetscht werden, daß das Fasermaterial vor dem Trocknen 40 bis 80 Gew.%, je nach Material auch mehr, seines Eigengewichts an Behandlungsflotte aufgenommen hat. Das Trocknen des Materials erfolgt unter üblichen Bedingungen, z.B. bei 80°C / 10 min. bis 150°C / 10 min. So ausgerüstete Gewebe zeigen auch nach mehreren Wäschen bei 60°C gute Permanenz der flammhemmenden Wirkung. Je nach eingesetzten Produkten ist die Permanenz sogar noch nach ein bis mehreren Kochwäschen gegeben. Falls erfindungsgemäße Zusammensetzungen in Form wäßriger Dispersionen eingesetzt werden, kann die Behandlung der

Fasermaterialien unter Umständen auch nach einem Ausziehverfahren erfolgen. Dies ist z.B. bei Verwendung bestimmter ethoxilierter Alkohole in einer Reihe von Fällen möglich.

Weitere vorteilhafte Möglichkeiten der Anwendung erfindungsgemäßer Zusammensetzungen bestehen darin, erfindungsgemäße Zusammensetzungen in Kombination mit anderen Produkten gleichzeitig oder nacheinander auf Fasermaterialien aufzubringen. Diese anderen Produkte können z.B. selbst auch flammhemmende Wirkungen verleihen. Sehr gut bewährt hat sich die Kombination von erfindungsgemäßen Zusammensetzungen mit N-Methyloldialkylphosphonopropionamiden. Diese Kombination läßt sich gut für die Behandlung von Mischgeweben einsetzen. Eine Möglichkeit hierzu besteht z.B. in den folgenden zwei Arbeitsweisen:

a) Mischgewebe aus Polyester / Baumwolle werden mit Lösungen erfindungsgemäßer Zusammensetzungen behandelt (Foulard), wobei das Mischgewebe vorher mit dem bekannten flammhemmenden Mittel N-Methyloldimethylphosphonopropionamid behandelt worden war, wie z.B. in der AT-Patentschrift Nr. 269 058 (Ciba AG) beschrieben,

b) ein mit N-Methylol-dimethylphosphonopropionamid vorbehandeltes Mischgewebe aus 80 % Baumwolle und 20 % Polyamid wird mit einer Lösung einer erfindungsgemäßen Zusammensetzung behandelt.

Die Erfindung wird nunmehr durch Ausführungsbeispiele veranschaulicht.

Beispiel 1:

Zuerst wurden nach folgendem Verfahren Dimethylphosphit und p-Benzochinon miteinander umgesetzt, wobei anzunehmen ist, daß als Hauptprodukt ein Hydrochinonester der Formel

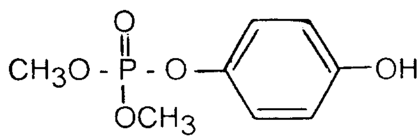

gebildet wurde. Bei den nachfolgenden Angaben wird daher unterstellt, daß dieser Ester als Hauptprodukt gebildet wurde.

Zu 1,5 Mol Dimethylphosphit in 3600 g Wasser wurde bei Raumtemperatur 1 Mol p-Benzochinon gegeben. Nach Zugabe von 0,13 Mol Triethanolamin setzte die Reaktion ein. Im Verlauf der Umsetzung sank der pH-Wert ab, und die Reaktionsgeschwindigkeit nahm ab. Durch Zugabe von weiteren 0,13 Mol Triethanolamin ließ sich die Reaktionsgeschwindigkeit wieder erhöhen. Nach beendeter Umsetzung wurde auf ca. 75°C aufgeheizt und es wurden 0,08 Mol Natriumsulfit in fester Form zugegeben. Nach ca. 5 Minuten wurde auf ca. 20°C abgekühlt. Vor der Umsetzung (Verfahrensschritt b) (2. Stufe) des Esters der obigen Formel mit Diisocyanat wurde der Ester, der aus der wäßrigen Lösung ausfällt, isoliert und getrocknet.

Ein Gemisch aus 218 g (1 Mol) des Esters der obigen Formel, 174g (1 Mol) m-Toluylen-diisocyanat und 1510 g Essigsäureethylester wurde auf 70°C erwärmt. Nach Zugabe von etwas Triethylamin (Katalysator) wurde noch 1 Stunde bei 70°C gerührt. Anschließend wurden 1235 g Methanol zugegeben. Die erhaltene Lösung wurde bei Raumtemperatur mittels Foulardierung (Flottenaufnahme 90 %) auf ein Gewebe aus 100 % Polyester aufgebracht. Das Gewebe wurde 10 Minuten bei 110°C getrocknet. Die durch das Foulardieren aufgebrachte Zusammensetzung bewirkte eine gute flammhemmende Wirkung im Vergleich zu einer nicht-foulardierten Gewebeprobe aus dem gleichen Material. Diese flammhemmende Wirkung blieb auch nach mehreren 60°C-Wäschen voll erhalten.

Beispiel 2 (Umsetzung mit Diisocyanat ohne zusätzliches Lösungsmittel)

218g (1 Mol) des aus Dimethylphosphit und p-Benzochinon erhaltenen Esters von Beispiel 1 wurden auf ca. 80°C erwärmt. Dann wurden 174 g (1 Mol) m-Toluylendiisocyanat zugegeben. Nach Zutropfen katalytischer Mengen an Triethylamin wurde noch 1 Stunde bei 80°C gerührt. Anschließend gab man 2774 g Methanol zu. Das weitere Vorgehen und die dabei erhaltenen Ergebnisse entsprachen den Angaben von Beispiel 1.

Beispiel 3

218 g (1 Mol) des aus Dimethylphosphit und p-Benzochinon erhaltenen Esters von Beispiel 1 wurden vorgelegt und auf 80°C erwärmt. Dann gab man 250 g (1 Mol) 4,4'-Diphenylmethan-diisocyanat zu. Nach Zutropfen katalytischer

Mengen Dibutylzinndilaurat wurde noch 4 Stunden bei 80°C weitergerührt, anschließend wurden 1404 g Dimethylsulfoxid zugegeben.
Die erhaltene Lösung wurde auf ein Mischgewebe aus 70 % Baumwolle und 30 % Polyester mittels Foulardieren aufgebracht (Flottenaufnahme ca. 90 Gew.%). Das Mischgewebe war zuvor mit N-Methylol-dimethyl-phosphonopropionamid vorbehandelt worden. Nach dem Foulardieren wurde das Gewebe 10 Minuten bei 110°C getrocknet. Die durch die Behandlung verliehenen flammhemmenden Eigenschaften blieben auch nach mehreren Kochwäschen voll erhalten.

<u>Beispiel 4</u>

Eine Mischung aus 4,32 g p-Benzochinon und 185,9 g n-Butylacetat wurde auf 40°C erwärmt. Anschließend wurden 5,50 g Dimethylphosphit zugegeben. Eine exotherme Reaktion setzte nach Hinzufügen von 0,30 g Triethylendiamin $N_2(CH_2CH_2)_3$ ein. Nach Abklingen der Wärmeentwicklung wurde weitere 2 Stunden gerührt, etwas Aktivkohle zugegeben, auf 70°C geheizt, 5 Minuten bei ca. 70°C gehalten und anschließend filtriert.
Zum Filtrat wurden 6,96 g eines 80 : 20-Gemischs aus 2.4- und 2.6-Toluoldiisocyanat hinzugefügt. Die Mischung wurde auf ca. 70°C erwärmt, und es wurden einige Tropfen Dibutylzinndilaurat zugegeben. Nach etwa 20 Minuten wurden 1,79g 1.1.1-Trimethylolpropan hinzugefügt. Zum erhaltenen Reaktionsgemisch gab man 4,45 g n-Butanol, wonach eine klare Lösung resultierte.

Von der erhaltenen Mischung wurden ca. 163 g Butylacetat abdestilliert. Nach Zugabe von 23,2 g Methanol wurde die erhaltene Lösung mittels Foulard auf ein ungefärbtes Gewebe und auf blau gefärbte Maschenware, jeweils aus 100 % Polyester, aufgebracht. Die Naßaufnahme (nach Abquetschung, vor Trocknung) betrug ca. 100 %, bezogen auf Gewebegewicht bzw. Gewicht der Maschenware. Die Trocknung erfolgte bei 110°C während 10 Minuten. Der Brennbarkeitstest ergab sehr gute flammhemmende Wirkung sowohl ohne vorhergehende Wäsche der Polyesterware als auch nach 20 Feinwäschen (30°C, Haushaltswaschmaschine, Waschmittel).

**Patentansprüche**

**Patentansprüche für folgende Vertragsstaaten : AT, BE, CH, DE, DK, FR, GB, IT, LI, NL, PT, SE**

1. Zusammensetzung, erhältlich durch folgende Verfahrensschritte

   a) Umsetzung eines Phosphits oder eines Gemischs von Phosphiten der allgemeinen Formel (I)

   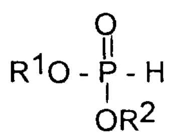

   (I)

   mit einem Benzochinon, Naphthochinon oder Anthrachinon oder einem Gemisch solcher Chinone bei einem pH-Wert von 6,5 oder höher, vorzugsweise von 7 bis 11 und gegebenenfalls in Anwesenheit eines Lösungsmittels, wobei das eingesetzte Chinon unsubstituiert sein kann oder an einem oder an mehreren aromatischen Ringen einen oder mehrere Substituenten aufweisen kann,

   b) Umsetzung des bei Verfahrensschritt a) erhaltenen Produkts mit einem Di- oder Polyisocyanat in dem mindestens zwei -N=C=O-Gruppen an zweiwertige oder mehrwertige organische Reste gebunden sind oder einem Gemisch solcher Isocyanate, gegebenenfalls in Gegenwart einer Verbindung $R^1OH$ und gegebenenfalls in Gegenwart eines Katalysators,

   c) gegebenenfalls Entfernen des Lösungsmittels nach Verfahrensschritt a) und/oder nach Verfahrensschritt b),

   d) gegebenenfalls weitere Umsetzung mit einem mehrwertigen Alkohol, insbesondere Trimethylolpropan,

   wobei $R^1$ und $R^2$ unabhängig voneinander für einen Alkylrest mit 1 bis 8 C-Atomen oder für einen Phenylrest stehen, wobei jeder dieser Alkylreste oder Phenylreste durch ein oder mehrere Halogenatome substituiert sein kann.

2. Zusammensetzung nach Anspruch 1, dadurch gekennzeichnet, daß in Schritt a) unsubstituiertes p-Benzochinon oder 1.2- oder 1.4-Naphthochinon verwendet wurde.

**3.** Zusammensetzung nach Anspruch 1 oder 2, dadurch gekennzeichnet, daß zu Beginn von Verfahrensschritt a) der pH-Wert des Reaktionsgemisches 7 bis 8 betrug.

**4.** Zusammensetzung nach einem oder mehreren der Ansprüche 1 bis 3, dadurch gekennzeichnet, daß Verfahrensschritt a) in einer Verbindung $R^3OR^5$, einer Verbindung $R^5OR^5$, einer Verbindung $R^5COOR^5$ oder in einer Verbindung $(R^3O)_x(R^4O)_{3-x}P = O$ oder einem Gemisch solcher Verbindungen als Lösungsmittel durchgeführt wird, wobei jeder anwesende Rest $R^3$ ein, ggf. substituierter, Phenyl- oder Naphthylrest und jeder anwesende Rest $R^4$ ein unverzweigter oder verzweigter Alkylrest mit 1 bis 18, vorzugsweise mit 4 bis 12 Kohlenstoffatomen ist, jeder anwesende Rest $R^5$ ein Alkylrest mit 1 bis 6 Kohlenstoffatomen ist und wobei x für 0, 1, 2 oder 3 steht.

**5.** Zusammensetzung nach einem oder mehreren der Ansprüche 1 bis 4, dadurch gekennzeichnet, daß in Verfahrensschritt b) ein Diisocyanat oder ein Gemisch von Diisocyanaten der Formel

$$O = C = N - X - N = C = O$$

verwendet wurde, worin X für

$$-(CH_2)_n-$$

oder für

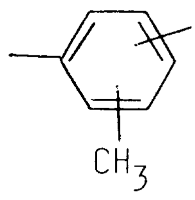

oder für

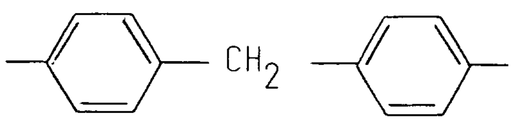

oder für

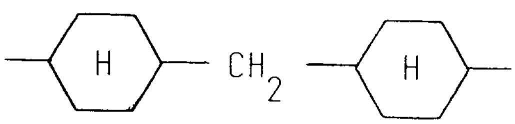

steht,
worin n für eine Zahl von 3 bis 8 steht,
oder daß in Verfahrensschritt b) Isophorondiisocyanat verwendet wurde.

**6.** Zusammensetzung nach einem oder mehreren der Ansprüche 1 bis 5, dadurch gekennzeichnet, daß in Verfahrensschritt b) ein Di- oder Polyisocyanat, vorzugsweise ein Toluoldiisocyanat mit einem bei Verfahrensschritt a) erhaltenen Produkt in solchem Mengenverhältnis umgesetzt wurde, daß 1,3 bis 3,0, insbesondere 1,3 bis 2,0 Äquivalente an Isocyanatgruppen pro Äquivalent an Hydroxylgruppen des Umsetzungsprodukts aus Verfahrensschritt a) vorlagen, und daß anschließend an Verfahrensschritt b) die überschüssigen, aus dem Di- oder Polyisocyanat stammenden, Isocyanatgruppen mit einem mehrwertigen Alkohol, insbesondere 1.1.1-Trimethylolpropan, umgesetzt wurden.

7. Verwendung einer Zusammensetzung gemäß einem oder mehreren der Ansprüche 1 bis 6 in Form einer Lösung oder Dispersion dieser Zusammensetzung zur Behandlung von Fasermaterialien.

8. Verwendung nach Anspruch 7, dadurch gekennzeichnet, daß das Fasermaterial ein gewebtes, gewirktes oder nicht-gewebtes Flächengebilde ist, welches 70 bis 100 Gew.% Polyester, vorzugsweise Polyethylenterephthalat, enthält.

**Patentansprüche für folgenden Vertragsstaat : ES**

1. Verfahren zur Herstellung von Zusammensetzungen, die phosphorhaltige organische Verbindungen enthalten, gekennzeichnet durch folgende Verfahrensschritte

   a) Umsetzung eines Phosphits oder eines Gemischs von Phosphiten der allgemeinen Formel (I)

   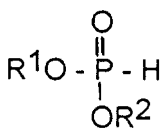

   (I)

   mit einem Benzochinon, Naphthochinon oder Anthrachinon oder einem Gemisch solcher Chinone bei einem pH-Wert von 6,5 oder höher, vorzugsweise von 7 bis 11 und gegebenenfalls in Anwesenheit eines Lösungsmittels, wobei das eingesetzte Chinon unsubstituiert sein kann oder an einem oder an mehreren aromatischen Ringen einen oder mehrere Substituenten aufweisen kann,

   b) Umsetzung des bei Verfahrensschritt a) erhaltenen Produkts mit einem Di- oder Polyisocyanat in dem mindestens zwei -N=C=O-Gruppen an zweiwertige oder mehrwertige organische Reste gebunden sind oder einem Gemisch solcher Isocyanate, gegebenenfalls in Gegenwart einer Verbindung $R^1OH$ und gegebenenfalls in Gegenwart eines Katalysators,

   c) gegebenenfalls Entfernen des Lösungsmittels nach Verfahrensschritt a) und/oder nach Verfahrensschritt b),

   d) gegebenenfalls weitere Umsetzung mit einem mehrwertigen Alkohol, insbesondere Trimethylolpropan,

   wobei $R^1$ und $R^2$ unabhängig voneinander für einen Alkylrest mit 1 bis 8 C-Atomen oder für einen Phenylrest stehen, wobei jeder dieser Alkylreste oder Phenylreste durch ein oder mehrere Halogenatome substituiert sein kann.

2. Verfahren nach Anspruch 1, dadurch gekennzeichnet, daß in Schritt a) unsubstituiertes p-Benzochinon oder 1.2- oder 1.4-Naphthochinon verwendet wird.

3. Verfahren nach Anspruch 1 oder 2, dadurch gekennzeichnet, daß zu Beginn von Verfahrensschritt a) der pH-Wert des Reaktionsgemisches 7 bis 8 beträgt.

4. Verfahren nach einem oder mehreren der Ansprüche 1 bis 3, dadurch gekennzeichnet, daß Verfahrensschritt a) in einer Verbindung $R^3OR^5$, einer Verbindung $R^5OR^5$, einer Verbindung $R^5COOR^5$ oder in einer Verbindung $(R^3O)_x(R^4O)_{3-x}P = O$ oder einem Gemisch solcher Verbindungen als Lösungsmittel durchgeführt wird, wobei jeder anwesende Rest $R^3$ ein, ggf. substituierter, Phenyl- oder Naphthylrest und jeder anwesende Rest $R^4$ ein unverzweigter oder verzweigter Alkylrest mit 1 bis 18, vorzugsweise mit 4 bis 12 Kohlenstoffatomen ist, jeder anwesende Rest $R^5$ ein Alkylrest mit 1 bis 6 Kohlenstoffatomen ist und wobei x für 0, 1, 2 oder 3 steht.

5. Verfahren nach einem oder mehreren der Ansprüche 1 bis 4, dadurch gekennzeichnet, daß in Verfahrensschritt b) ein Diisocyanat oder ein Gemisch von Diisocyanaten der Formel

$$O = C = N - X - N = C = O$$

   verwendet wird, worin X für

$$-(CH_2)_n-$$

oder für

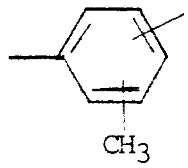

oder für

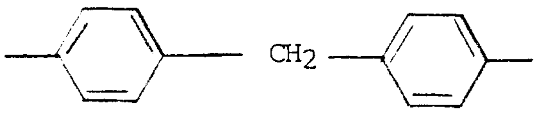

oder für

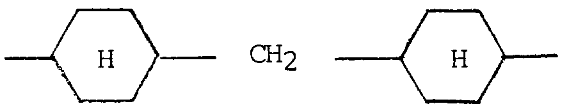

steht,
worin n für eine Zahl von 3 bis 8 steht,
oder daß in Verfahrensschritt b) Isophorondiisocyanat verwendet wird.

6. Verfahren nach einem oder mehreren der Ansprüche 1 bis 5, dadurch gekennzeichnet, daß in Verfahrensschritt b) ein Di- oder Polyisocyanat, vorzugsweise ein Toluoldiisocyanat mit einem bei Verfahrensschritt a) erhaltenen Produkt in solchem Mengenverhältnis umgesetzt wird, daß 1,3 bis 3,0, insbesondere 1,3 bis 2,0 Äquivalente an Isocyanatgruppen pro Äquivalent an Hydroxylgruppen des Umsetzungsprodukts aus Verfahrensschritt a) vorliegen, und daß anschließend an Verfahrensschritt b) die überschüssigen, aus dem Di- oder Polyisocyanat stammenden, Isocyanatgruppen mit einem mehrwertigen Alkohol, insbesondere 1.1.1-Trimethylolpropan, umgesetzt werden.

7. Verwendung einer Zusammensetzung erhältlich durch ein Verfahren gemäß einem oder mehreren der Ansprüche 1 bis 6 in Form einer Lösung oder Dispersion dieser Zusammensetzung zur Behandlung von Fasermaterialien.

8. Verwendung nach Anspruch 7, dadurch gekennzeichnet, daß das Fasermaterial ein gewebtes, gewirktes oder nicht-gewebtes Flächengebilde ist, welches 70 bis 100 Gew. % Polyester, vorzugsweise Polyethylenterephthalat, enthält.

## Claims

**Claims for the following Contracting States : AT, BE, CH, DE, DK, FR, GB, IT, LI, NL, PT, SE**

1. Composition obtainable by the following process steps:

a) reaction of a phosphite or of a mixture of phosphites of the general formula (I)

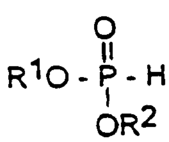 (I)

with a benzoquinone, naphthoquinone or anthraquinone or a mixture of such quinones, at a pH of 6.5 or more,

preferably from 7 to 11 and in the presence or absence of a solvent, it being possible for the quinone employed to be unsubstituted or to have one or more substituents on one or more aromatic rings,

b) reaction of the product obtained in process step a) with a di- or polyisocyanate in which at least two -N=C=O groups are attached to divalent or polyvalent organic radicals, or a mixture of such isocyanates, optionally in the presence of a compound $R^1OH$ and optionally in the presence of a catalyst,

c) optionally removal of the solvent after process step a) and/or after process step b),

d) optionally further reaction with a polyhydric alcohol, especially trimethylolpropane,

in which $R^1$ and $R^2$ independently of one another represent an alkyl radical having 1 to 8 C atoms, or represent a phenyl radical, in which each of these alkyl radicals or phenyl radicals can be substituted by one or more halogen atoms.

**2.** Composition according to Claim 1, characterized in that unsubstituted p-benzoquinone or 1,2- or 1,4-naphthoquinone has been used in step a).

**3.** Composition according to Claim 1 or 2, characterized in that the pH of the reaction mixture at the start of process step a) was 7 to 8.

**4.** Composition according to one or more of Claims 1 to 3, characterized in that process step a) is carried out in a compound $R^3OR^5$, a compound $R^5OR^5$, a compound $R^5COOR^5$ or in a compound $(R^3O)_x(R^4O)_{3-x}P=O$ or a mixture of such compounds as the solvent, in which each radical $R^3$ present is an optionally substituted phenyl or naphthyl radical and each radical $R^4$ present is an unbranched or branched alkyl radical having 1 to 18, preferably 4 to 12 carbon atoms, each radical $R^5$ present is an alkyl radical having 1 to 6 carbon atoms, and in which x represents 0, 1, 2 or 3.

**5.** Composition according to one or more of Claims 1 to 4, characterized in that a diisocyanate or a mixture of diisocyanates of the formula

$$O = C = N - X - N = C = O$$

in which X represents

$$-(CH_2)_n-$$

or represents

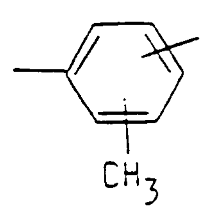

or represents

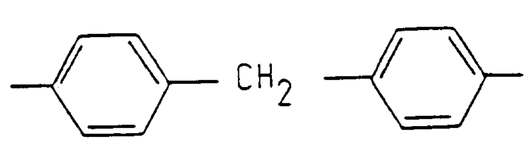

or represents

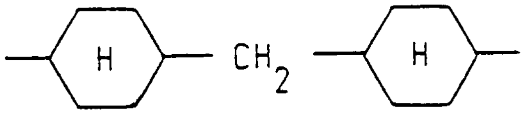

in which n represents a number from 3 to 8, was used in process step b), or in that isophorone diisocyanate was used in step b).

6. Composition according to one or more of Claims 1 to 5, characterized in that a di- or polyisocyanate, preferably a toluene diisocyanate, was reacted in process step b) with a product obtained in process step a) in a ratio of amounts such that 1.3 to 3.0, in particular 1.3 to 2.0 equivalents of isocyanate groups were present per equivalent of hydroxyl groups of the reaction product from process step a), and after process step b), the excess isocyanate groups originating from the di- or polyisocyanate were reacted with a polyhydric alcohol, in particular 1,1,1-trimethylolpropane.

7. Use of a composition according to one or more of Claims 1 to 6, in the form of a solution or dispersion of this composition, for treating fibre materials.

8. Use according to Claim 7, characterized in that the fibre material is a woven, knitted or non-woven sheet-like structure which comprises 70 to 100% by weight of polyester, preferably polyethylene terephthalate.

**Claims for the following Contracting State : ES**

1. Process for the preparation of compositions comprising phosphorus-containing organic compounds, characterized by the following process steps:

   a) reaction of a phosphite or of a mixture of phosphites of the general formula (I)

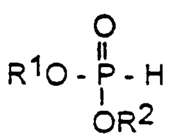 (I)

   with a benzoquinone, naphthoquinone or anthraquinone or a mixture of such quinones, at a pH of 6.5 or more, preferably from 7 to 11 and in the presence or absence of a solvent, it being possible for the quinone employed to be unsubstituted or to have one or more substituents on one or more aromatic rings,

   b) reaction of the product obtained in process step a) with a di- or polyisocyanate in which at least two -N=C=O groups are attached to divalent or polyvalent organic radicals, or a mixture of such isocyanates, optionally in the presence of a compound $R^1OH$ and optionally in the presence of a catalyst,

   c) optionally removal of the solvent after step a) and/or after step b),

   d) optionally further reaction with a polyhydric alcohol, especially trimethylolpropane,

in which $R^1$ and $R^2$ independently of one another represent an alkyl radical having 1 to 8 C atoms, or represent a phenyl radical, in which each of these alkyl radicals or phenyl radicals can be substituted by one or more halogen atoms.

2. Process according to Claim 1, characterized in that unsubstituted p-benzoquinone or 1,2- or 1,4-naphthoquinone is used in step a).

3. Process according to Claim 1 or 2, characterized in that the pH of the reaction mixture at the start of process step a) is 7 to 8.

4. Process according to one or more of Claims 1 to 3, characterized in that process step a) is carried out in a compound $R^3OR^5$, a compound $R^5OR^5$, a compound $R^5COOR^5$ or in a compound $(R^3O)_x(R^4O)_{3-x}P{=}O$ or a mixture of such compounds as the solvent, in which each radical $R^3$ present is an optionally substituted phenyl or naphthyl radical and each radical $R^4$ present is an unbranched or branched alkyl radical having 1 to 18, preferably 4 to 12 carbon atoms, each radical $R^5$ present is an alkyl radical having 1 to 6 carbon atoms, and in which x represents 0, 1, 2 or 3.

5. Process according to one or more of Claims 1 to 4, characterized in that a diisocyanate or a mixture of diisocyanates of the formula

$$O = C = N - X - N = C = O$$

in which X represents

$$-(CH_2)_n-$$

or represents

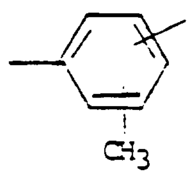

or represents

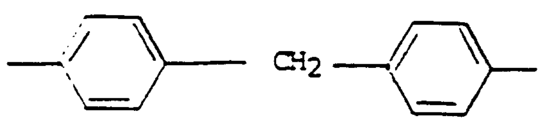

or represents

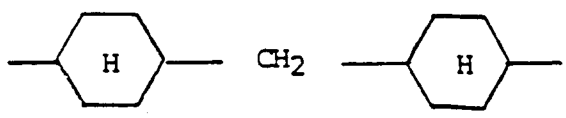

in which n represents a number from 3 to 8, is used in process step b), or in that isophorondiisocyanate is used in process step b).

6. Process according to one or more of Claims 1 to 5, characterized in that a di- or polyisocyanate, preferably a toluene diisocyanate, is reacted in process step b) with a product obtained in process step a) in a ratio of amounts such that 1.3 to 3.0, in particular 1.3 to 2.0 equivalents of isocyanate groups are present per equivalent of hydroxyl groups of the reaction product from process step a), and after process step b), the excess isocyanate groups originating from the di- or polyisocyanate are reacted with a polyhydric alcohol, in particular 1,1,1-trimethylolpropane.

7. Use of a composition obtainable by a process according to one or more of Claims 1 to 6, in the form of a solution or dispersion of this composition, for treating fibre materials.

8. Use according to Claim 7, characterized in that the fibre material is a woven, knitted or non-woven sheet-like structure which comprises 70 to 100% by weight of polyester, preferably polyethylene terephthalate.

## Revendications

**Revendications pour les Etats contractants suivants : AT, BE, CH, DE, DK, FR, GB, IT, LI, NL, PT, SE**

**1.** Composition pouvant être obtenue par les étapes suivantes :

a) réaction d'un phosphite ou d'un mélange de phosphites de formule générale (I)

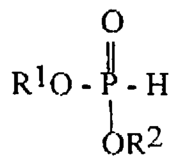

(I)

avec une benzoquinone, une naphtoquinone ou une anthraquinone, ou un mélange de ces quinones, à un pH de 6,5 ou plus, de préférence de 7 à 11, et éventuellement en présence d'un solvant, lu quinone utilisée pouvant être non substituée, ou pouvant comporter un ou plusieurs substituants sur un ou plusieurs noyaux aromatiques,
b) réaction du produit obtenu dans l'étape a) avec un di- ou un polyisocyanate dans lequel au moins deux groupes -N=C=O sont fixés à des radicaux organiques di- ou polvyalents, ou avec un mélange de ces isocyanates, éventuellement en présence d'un composé $R^1OH$, et éventuellement en présence d'un catalyseur,
c) éventuellement, élimination du solvant après l'étape a) et/ou après l'étape b),
d) éventuellement, réaction ultérieure avec un polyalcool, en particulier le triméthylolpropane,

où $R^1$ et $R^2$, indépendamment l'un de l'autre, représentent chacun un radical alkyle ayant de 1 à 8 atomes de carbone ou un radical phényle, chacun de ces radicaux alkyle ou phényle pouvant être substitué par un ou plusieurs atomes d'halogène.

**2.** Composition selon la revendication 1, caractérisée en ce que, dans l'étape a), on a utilise la 1,2- ou la 1,4-naphtoquinone ou la p-benzoquinone non substituée.

**3.** Composition selon la revendication 1 ou 2, caractérisée en ce que, au début de l'étape a), le pH du mélange réactionnel était de 7 à 8.

**4.** Composition selon l'une ou plusieurs des revendications 1 à 3, caractérisée en ce que l'étape a) est mise en oeuvre dans un composé $R^3OR^5$, un composé $R^5OR^5$, un composé $R^5COOR^5$ ou dans un composé $(R^3O)_x(R^4O)_{3-x}P=O$ ou un mélange de ces composés, servant de solvant, chaque radical $R^3$ présent étant un radical phényle ou naphtyle éventuellement substiué, et chaque radical présent $R^4$ étant un radical alkyle à chaîne droite ou ramifiée ayant de 1 à 18 et de préférence de 4 à 12 atomes de carbone, chaque radical présent $R^5$ étant un groupe alkyle ayant de 1 à 6 atomes de carbone, et x valant 0, 1, 2 ou 3.

**5.** Composition selon l'une ou plusieurs des revendications 1 à 4, caractérisée en ce que, dans l'étape b), on a utilisé un diisocyanate ou un mélange de diisocyanates de formule

$$O = C = N - X - N = C = O$$

dans laquelle X est

$$-(CH_2)_n-$$

ou

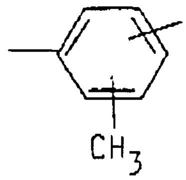

ou

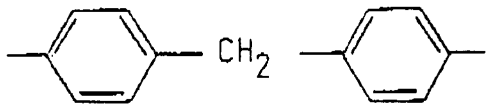

ou

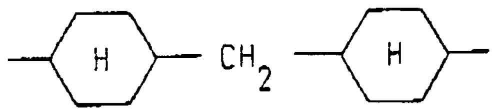

où n est un nombre de 3 à 8,
ou en ce que, dans l'étape b), on a utilisé du diisocyanate d'isophorone.

6. Composition selon l'une ou plusieurs des revendications 1 à 5, caractérisée en ce que, dans l'étape b), on a fait réagir un di- ou un polyisocyanate, de préférence un diisocyanate de toluène, avec un produit obtenu dans l'étape a), selon une proportion pondérale telle que l'on ait de 1,3 à 3,0 et en particulier de 1,3 à 2,0 équivalents de groupes isocyanate par équivalent de groupes hydroxyle du produit de réaction de l'étape a), et que, après l'étape b), les groupes isocyanate en excès, qui dérivent du di- ou du polyisocyanate, ont été mis à réagir avec un polyalcool, en particulier le 1,1,1-triméthylolpropane.

7. Utilisation d'une composition selon l'une ou plusieurs des revendications 1 à 6 sous forme d'une solution ou d'une dispersion de cette composition, pour le traitement de matières fibreuses.

8. Utilisation selon la revendication 7, caractérisée en ce que le matériau fibreux est une structure bidimensionnelle tissée, tricotée ou non tissée, qui contient de 70 à 100 % en poids de polyester, de préférence de poly(téréphtalàte d'éthylène).

**Revendications pour l'Etat contractants suivant : ES**

1. Procédé de préparation de compositions contenant des composés organiques phosphorés, caractérisé par les étapes suivantes :

   a) réaction d'un phosphite ou d'un mélange de phosphites de formule générale (I)

   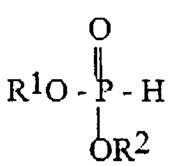 (I)

   avec une benzoquinone, une naphtoquinone ou une anthraquinone, ou un mélange de ces quinones, à un pH de 6,5 ou plus, de préférence de 7 à 11, et éventuellement en présence d'un solvant, la quinone utilisée pouvant être non substituée, ou pouvant comporter un ou plusieurs substituants sur un ou plusieurs noyaux aromatiques,

b) réaction du produit obtenu dans l'étape a) avec un di- ou un polyisocyanate dans lequel au moins deux groupes -N=C=O sont fixés à des radicaux organiques di- ou polyvalents, ou avec un mélange de ces isocyanates, éventuellement en présence d'un composé $R^1OH$, et éventuellement en présence d'un catalyseur,

c) éventuellement, élimination du solvant après l'étape a) et/ou après l'étape b),

d) éventuellement, réaction ultérieure avec un polyalcool, en particulier le triméthylolpropane,

où $R^1$ et $R^2$, indépendamment l'un de l'autre, représentent chacun un radical alkyle ayant de 1 à 8 atomes de carbone ou un radical phényle, chacun de ces radicaux alkyle ou phényle pouvant être substitué par un ou plusieurs atomes d'halogène.

**2.** Procédé selon la revendication 1, caractérisé en ce que, dans l'étape a), on utilise la 1,2- ou la 1,4-naphtoquinone ou la p-benzoquinone non substituée.

**3.** Procédé selon la revendication 1 ou 2, caractérisé en ce que, au début de l'étape a), le pH du mélange réactionnel est de 7 à 8.

**4.** Procédé selon l'une ou plusieurs des revendications 1 à 3, caractérisé en ce que l'étape a) est mise en oeuvre dans un compose $R^3OR^5$, un composé $R^5OR^5$, un composé $R^5COOR^5$ ou dans un composé $(R^3O)_x(R^4O)_{3-x}P=O$ ou un mélange de ces composés, servant de solvant, chaque radical $R^3$ présent étant un radical phényle ou naphtyle éventuellement substitué, et chaque radical présent $R^4$ étant un radical alkyle à chaîne droite ou ramifiée ayant de 1 à 18 et de préférence de 4 à 12 atomes de carbone, chaque radical présent $R^5$ étant un groupe alkyle ayant de 1 à 6 atomes de carbone, et x valant 0, 1, 2 ou 3.

**5.** Procédé selon l'une ou plusieurs des revendications 1 à 4, caractérisé en ce que, dans l'étape b), on utilise un diisocyanate ou un mélange de diisocyanates de formule

$$O = C = N - X - N = C = O$$

dans laquelle X est

$$-(CH_2)_n-$$

ou

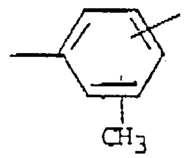

ou

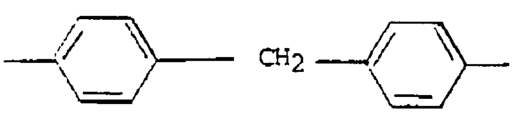

ou

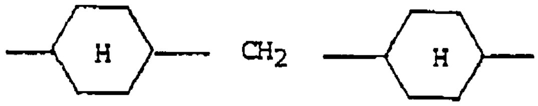

où n est un nombre de 3 à 8,
ou en ce que, dans l'étape b), on utilise du diisocyanate d'isophorone.

6. Procédé selon l'une ou plusieurs des revendications 1 à 5, caractérisé en ce que, dans l'étape b), on fait réagir un di- ou un polyisocyanate, de préférence un diisocyanate de toluène, avec un produit obtenu dans l'étape a), selon une proportion pondérale telle que l'on ait de 1,3 à 3,0 et en particulier de 1,3 à 2,0 équivalents de groupes isocyanate par équivalent de groupes hydroxyle du produit de réaction de l'étape a), et que, après l'étape b), les groupes isocyanate en excès, qui dérivent du di- ou du polyisocyanate, sont mis à réagir avec un polyalcool, en particulier le 1,1,1-triméthylolpropane.

7. Utilisation d'une composition pouvant être obtenue par un procédé selon l'une ou plusieurs des revendications 1 à 6 sous forme d'une solution ou d'une dispersion de cette composition, pour le traitement de matières fibreuses.

8. Utilisation selon la revendication 7, caractérisée en ce que la matière fibreuse est une structure bidimensionnelle tissée, tricotée ou non lissée, qui contient de 70 à 100 % en poids de polyester, de préférence de poly(téréphtalate d'éthylène).